# EUROPEAN PATENT SPECIFICATION

(11) **EP 4 433 199 B1**
(45) Date of publication and mention of the grant of the patent: **10.09.2025**
(21) Application number: 22839022.5
(22) Date of filing: 15.11.2022
(51) Int. Cl.: B01D 53/14

(54) **TERTIARY ALKANOLAMINE FOR GAS TREATING**
TERTIÄRES ALKANOLAMIN FÜR DIE GASBEHANDLUNG
ALCANOLAMINE TERTIAIRE POUR LE TRAITEMENT DE GAZ

(30) Priority: 16.11.2021 US 202163279817 P
(43) Date of publication of application: 25.09.2024
(73) Proprietor: DOW GLOBAL TECHNOLOGIES LLC, Midland, MI 48674 (US)
(72) Inventor: DOWDLE, John, R., Lake Jackson, Texas 77566 (US); KUVADIA, Zubin, B., Lake Jackson, Texas 77566 (US); SRIVASTAVA, Gagan, Lake Jackson, Texas 77566 (US); LAROCHE, Christophe, R., Lake Jackson, Texas 77566 (US); LAZAR, Simone, T., Lake Jackson, Texas 77566 (US)
(74) Representative: Beck Greener LLP
(86) International application number: PCT/US2022/049883
(87) International publication number: WO 2023/091384

(56) References cited:
- US-A- 5 877 386
- US-A1- 2015 141 731
- US-A1- 2017 225 117
- US-B1- 6 436 174

## Description

### Field

Embodiments relate to an aqueous absorption medium for removal of acid gases from an industrial gas stream that includes at least a tertiary alkanolamine and a process for removal of acid gases from an industrial gas streams that includes providing at least the tertiary alkanolamine.

### Introduction

Industrial gas streams may contain acid gases such as hydrogen sulfide, carbon dioxide, sulfur dioxide, carbon disulfide, hydrogen cyanide, carbonyl sulfide, and/or mercaptans as impurities. Industrial gases are in an essentially gaseous state, and thus do not include liquefied hydrocarbons such as liquefied petroleum gas (LPG), natural gas liquids (NGL), liquid condensate, or crude oil. Exemplary industrial gases include hydrocarbon gases, synthesis gases, flue gases, and biogas.

Hydrocarbon gases may include produced natural gases, refinery gases, and petrochemical process gases. Prior to being treated for acid gas removal, the gaseous hydrocarbon stream may be treated for condensate and water removal.

Synthesis gases (also referred to as syngas) consist primarily of hydrogen and carbon monoxide and are commonly produced from carbon-based feedstocks such as natural gas, coal, or biomass. Syngas production methods include gasification (or partial oxidation), steam reforming, and authothermal reforming. Syngas is typically fed to a water-gas shift reactor to produce a shifted syngas, whereas the carbon monoxide reacts with water to form carbon dioxide and hydrogen. In an exemplary process, the shifted syngas may be contacted with an aqueous absorption medium to remove acid gases.

Flue gases are combustion exhaust gases, typically from coal or natural gas fired power plants, but may also include hydrocarbon cracking units, fluid catalytic cracking units, or boilers for steam generation. In an exemplary process, after exiting the flue and/or subsequent cooling, the flue gas may be contacted with an aqueous absorption medium to remove acid gases.

Biogases are a mixture of methane, carbon dioxide, and relatively small amounts of other gases produced by anaerobic digestion of organic matter. Biogases may be produced from biodigesters, landfill gas recovery systems, or wastewater treatment facilities. After anaerobic digestion, the biogas may be contacted with an aqueous absorption medium to remove acid gases.

Amine based aqueous absorption media such as in US2017/225117 A1 may be used to remove acid gases from industrial gas streams. However, improved amine based aqueous absorption media for removal of acid gases from gaseous streams are sought, both in an effort to minimize operational costs and maximize acid gas removal.

### Summary

Embodiments may be realized by providing a method for treating an industrial gas stream that includes acid gases. The method includes contacting the industrial gas stream with an aqueous liquid absorption medium in a gas/liquid absorber. The aqueous liquid absorption medium includes at least a tertiary alkanolamine having the General Formula (I) in an amount for 10 wt% to 90 wt%, based on a total weight of the aqueous liquid absorption medium, 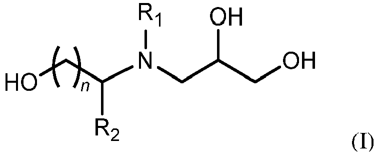 wherein R₁ is a C₁ to C₄ alkyl, R₂ is H or C₁ to C₂ alkyl, and n is an integer from 1 to 3, and water in an amount from 10 wt% to 90 wt%, based on a total weight of the aqueous liquid absorption medium.

### Brief Description of the Drawings

Features of the embodiments will become more apparent to those of ordinary skill in the art by describing in detail exemplary embodiments thereof with reference to the attached drawings in which:

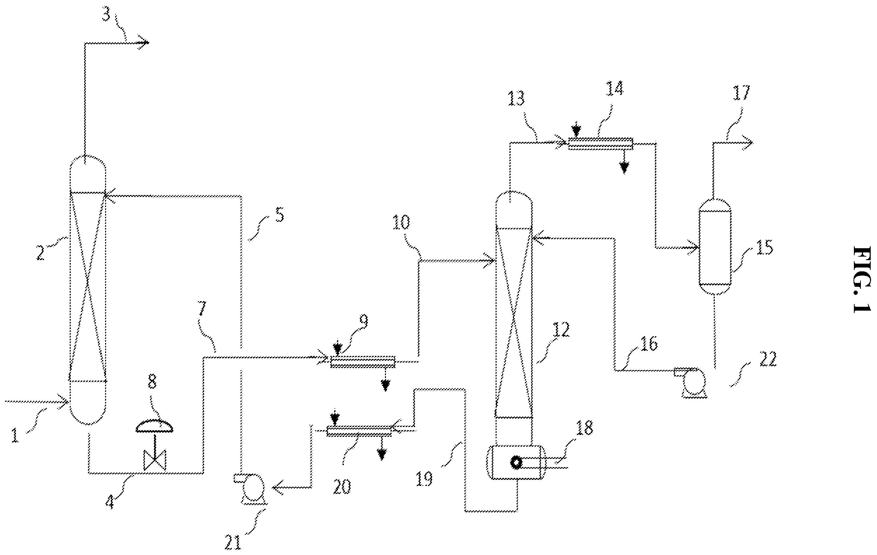

FIG. 1 illustrates an exemplary process diagram.

### Detailed Description

Tertiary and severely sterically hindered amines offer benefits to certain gas treating application. What is sought is an aqueous liquid absorption medium that includes a tertiary amine and targets removal of acid gases such as H₂S while minimizing amine loss due to volatility. Amine volatility losses may be dependent on the type of amine, amine concentration, and/or temperature or pressure of the outlet vapor streams. For example, the tertiary amine N-methyldiethanolamine (MDEA) can provide vaporization losses that are significant in systems operating at low pressure and/or with high contactor overhead temperatures. For example, for a liquid absorption medium that includes 50 wt % MDEA/ 50 wt% of water at 54 °C (130 °F) absorber top temperature and 20 psia pressure, amine loss may be undesirably high such as up to 4.5 lb/MMSCF (8 x 10⁻⁵ kg/Nm³).

In contrast, it is believed that a tertiary amine having the General Formula (I) 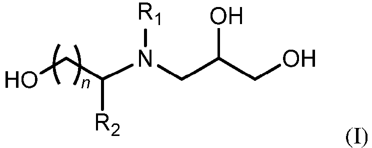 wherein R₁ is a C₁ to C₄ alkyl, R₂ is H or C₁ to C₂ alkyl, and n is an integer from 1 to 3 is particularly well-suited for use in treating an industrial gas stream for acid gas removal while minimizing amine losses, even at the low pressure and/or high temperatures seen in gas treating applications. Such an industrial gas stream may include (e.g., consist essentially of) hydrocarbon gas, synthesis gas, flue gas, or biogas. The industrial gas stream is essentially in a gaseous state. According to exemplary embodiments, referring to General Formula (I), R₁ may be a C₁ alkyl. R₂ may be H, and n may be 1.

It has been proposed to treat liquefied hydrocarbon, see U.S. Patent No. 9,732,298, with an absorbent aqueous solution of a tertiary amine 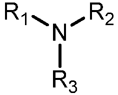 where R₁ is propane-2,3-diol; R₂ is hydrogen, methyl, ethyl, 2-hydroxyethyl, or propane-2,3-diol; and R₃ is hydrogen, methyl, ethyl, 2-hydroxyethyl or propane-2,3-diol. However, treating an industrial gas stream in a gas-liquid separation process has different considerations compared to treating a liquified hydrocarbon stream in a liquid-liquid separation process. For example, an amine that possesses low volatility (i.e., low vapor pressure) is beneficial for gas-liquid separations due to decreased solvent loss via vaporization, whereas liquid-liquid separations benefit from an amine with low hydrocarbon solubility loss (i.e., high hydrophilicity). It is important to note that amine solvents with low hydrocarbon solubility, useful for liquid-liquid separations may not necessarily have low volatility desired for gas-liquid separations and vice-versa. This behavior is due to differences in the chemical structure of a compound that govern either low hydrocarbon solubility and/or low vapor pressure such as molecular weight, overall polarity of the amine and the strength of its bonding interactions with said medium.

Further, it has been surprisingly found that tertiary amines of General Formula (I) described here within are particularly well suited for treating industrial gas streams. For many commercial applications, operating conditions leading to high losses such as high temperatures and low pressures cannot be avoided in gas treating and are less of a concern in liquid treating. Further, for gas treating loss mitigation processes such as water washes are not desired due to the associated increased capital cost and operational complexity. In such situations, it is desirable to choose a tertiary amine that is known to have a low volatility. In particular, tertiary amines having a volatility lower than that of MDEA are found to be improvements. It has been found that an indicator of amine volatility may be the normal boiling point, in particular the higher the normal boiling point, the lower the amine volatility.

Referring to Table 1, below it is shown that tertiary amines accordingly to General Formula (I) described herewithin have a higher boiling point compared to MDEA but a higher pKa compared to TEA, both of which are known to be used as tertiary amines for gas treating.

**Table 1**

| **Abbr. \| Name \| CAS#** | **Structure** | **Molecular Weight (kg kmol⁻¹)** | **Boiling Point* (°C)** | **pKₐ*** |
|---|---|---|---|---|
| TEA triethanolamine (102-71-6) (not part of an embodiment) | 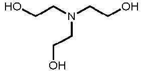 | 149.19 | 335 | 7.77 |
| MDEA N-methyldiethanolamine (CAS 105-59-9) (not part of an embodiment) | 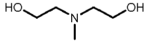 | 119.16 | 247 | 8.81 |
| HEMAPD 3-[2-hydroxyethyl)methylamino]-1,2-propanediol | 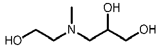 | 149.19 | 292 | 8.45 |
| HEEAPD 3-[2-hydroxyethyl)ethylamino]-1,2-propanediol | 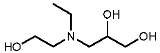 | 163.22 | 305 | 8.54 |
| HEPAPD 3-[2-hydroxyethyl)propylamino]-1,2-propanediol | 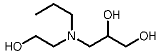 | 177.24 | 318 | 8.54 |
| HEBAPD 3-[2-hydroxyethyl)butylamino]-1,2-propanediol | 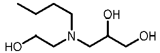 | 191.15 | 332 | 8.54 |
| HPMAPD 3-[2-hydroxypropyl)methylamino]-1,2-propanediol | 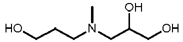 | 163.22 | 315 | 8.28 |
| HPEAPD 3-[2-hydroxypropyl)ethylamino]-1,2-propanediol | 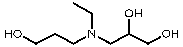 | 177.24 | 328 | 8.36 |
| HMEMAPD 3-[(2-hydroxy-1-methylethyl)methylamino]-1,2-propanediol | 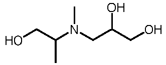 | 163.21 | 297 | 8.53 |
| EHMEAPD 3-[ethyl(2-hydroxy-1-methylethyl)amino]-1,2-propanediol | 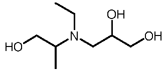 | 177.24 | 311 | 8.62 |
| HMPMAPD 3-[[1-(hydroxymethyl)propyl]methylamino]-1,2-propanediol | 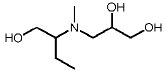 | 177.24 | 311 | 8.53 |

In particular, referring to Table 1, above, it is shown that the normal boiling point of MDEA is 247 °C (477 °F). While tertiary amines according to the General Formula (I) have much higher normal boiling points, such greater than 277 °C (530 °F) and/or greater than 290 °C (554 °F). Further, while the normal boiling point of TEA is over 316 °C (600 °F), TEA suffers from a significant drawback of having a pKa of only 7.77, which is insufficiently basic to maintain a high acid gas carrying capacity. While tertiary amines according to the General Formula (II) have sufficient pKa (e.g., within the range of 8 to 9 and/or 8.40 to 8.70).

Also, while increased molecular weight may reduce volatility, it is still desirable to maintain a relatively low molecular weight in practical applications to maintain a high capacity for acid gases in gas treating applications. As such, for gas treating tertiary amines with a molecular weight of 200 kg/kmol or less are desirable.

According to exemplary embodiments, the tertiary alkanolamine for gas treating has a normal boiling point greater than 247 °C (477 °F) and/or greater than 260 °C (500 °F), a weight molecular weight less than 180 kg/kmol, and a pKa ≥ 8.0.

The aqueous liquid absorption medium may include at least 10 wt% to 90 wt% (e.g., 20 wt% to 80 wt%, 30 wt% to 70 wt%, 35 wt% to 65 wt%, 40 wt% to 60 wt%, 45 wt% to 55 wt%, etc.) of a tertiary alkanolamine having the General Formula (I). The aqueous liquid absorption medium may also include 10 wt% to 90 wt% (e.g., 20 wt% to 80 wt%, 30 wt% to 70 wt%, 35 wt% to 65 wt%, 40 wt% to 60 wt%, 45 wt% to 55 wt%, etc.) of water.

The aqueous liquid absorption medium may further include an acid, e.g., to help to regenerate the solvent to low loadings and enhance the potency of the process. Exemplary acids include phosphoric acid, hydrochloric acid, sulfuric acid, sulfurous acid, boric acid, phosphonic acid, and the like. The acid may be present in an amount from 0.1 wt% to 3.0 wt%, based on total weight of the aqueous liquid absorption medium. For example, the aqueous liquid absorption medium further includes phosphoric acid in an amount from 0.1 wt% to 3.0 wt% (e.g., 0.1 wt% to 2.0 wt%, 0.1 wt% to 1.5 wt%, 0.1 wt% to 1.1 wt%, etc.), based on total weight of the aqueous liquid absorption medium.

The aqueous liquid absorption medium may further include at least one activator in a sufficient amount that may help accelerate a reaction rate and hence removal of acid gases such as carbon dioxide from a gaseous stream. As such activators are sought that allow for efficient removal of acid gases such as carbon dioxide at relatively low concentrations.

Acid gas removal from industrial gas streams may take place in gas-liquid absorber equipment (such as such as Pressure Swing Absorption (PSA) and Temperature Swing Absorption (TSA) using liquid absorbents). The operating temperature for the contacting of the industrial gas stream may be from 50 °C to 300 °C. Further, the aqueous liquid absorption medium itself during gas treating may be at an elevated temperature of from 55 °C to 80 °C.

Loss of amine due to volatility is a concern in gas-liquid separation processes. Volatility may be of particular concern when components of the aqueous absorption medium have a relatively low boiling point in comparison to commonly used tertiary alkanolamines. As such, it has been found that for aqueous absorption media that include at the tertiary alkanolamine of general formula (I), it may be useful for both to have relatively high boiling points (e.g., similar boiling points of at least 280 °C). It is noted, while a low boiling point does imply a high volatility in gas treating application, it does not necessarily imply a high solubility in the aqueous absorption medium itself. In other words, volatility and solubility are different principles and in this instance the concern is volatility. In this regard, amines that have are highly volatile tend to be impractical and costly for acid gas treating of a gaseous stream.

In a process for removal of acid gases, the aqueous absorption medium may contact a gaseous mixture comprising the acidic gases counter currently at low temperature and high pressure in an absorber tower. Cyclic sorption processes may use high rates of gas-liquid exchange, the transfer of large liquid inventories between the absorption and regeneration steps, and high energy requirements for the regeneration of amine solutions. Such processes may utilize a large temperature differential in the gas stream between the absorption and desorption (regeneration) parts of the cycle. For example, aqueous amine scrubbing methods may use relatively low temperatures, e.g., less than 50° C., for acid gas uptake with an increase to a temperature to above about 100° C., e.g., 120° C. or higher, for the desorption. Regeneration of large quantities of aqueous absorption medium may be at temperatures above 100° C., such that many commonly used amines may suffer significant amine loss due to vaporization in the temperature swing processes.

The chemical reaction, due to the heat of reaction between the amine and the acid gas is exothermic. It will raise the temperature of the gas. Treated gas (lean gas or sweet gas) enters the absorber column at the bottom and leaves at the top of the absorber column. The amine solution loaded with acid gas (rich solution) leaves the bottom of the absorber column.

### Examples

Approximate properties, characters, parameters, etc., are provided below with respect to the illustrative working examples, comparative examples, and the information used in the reported results for the working and comparative examples.

The process for treating the gas stream may be based on that shown in FIG. 1, in which the aqueous liquid absorption medium can be fed via feed line 5 into an upper portion of a gas-liquid countercurrent packed-bed absorption column 2. The gas stream can be introduced through feed line 1 into the lower portion of absorption column 2 at a gas flow rate of approximately 17 standard liter per minute. The dry feed composition is 90 mol% nitrogen and 10 mol% carbon dioxide. The pressure in the absorption column is to be set to approximately 250 psig. The clean gas (i.e., reduced amounts of CO₂) is discharged at the top of the absorption column 2 through outlet line 3 and residual CO₂ levels are measured by gas chromatography. The aqueous liquid absorption medium that is rich with CO₂ flows toward the lower portion of the absorption column 2 and leaves via line 4.

The rich aqueous absorption medium in line 4 can be reduced in pressure by the level control valve 8 and flow through line 7 to heat exchanger 9, which can heat the rich aqueous absorption medium. Then, the heated rich aqueous absorption medium can enter an upper portion of a regenerator 12 via line 10. The regenerator 12 is equipped with random packing (e.g., Pro-Pak^{®}) that can effect desorption of the H₂S and CO₂. The pressure of the regenerator is to be set at approximately 27 psia. The gases from the regenerator 12 can then be passed through line 13 into condenser 14, where cooling and condensation of any residual water and amine can occur. The gases then can enter a separator 15, where the condensed liquid can be separated from the vapor phase. The condensed aqueous solution can be pumped via pump 22 through line 16 to an upper portion of the regenerator 12. The gases remaining from the condensation can be removed through line 17 for final collection and/or disposal. The regenerated aqueous solution is to flow down through the regenerator 12 and the close-coupled reboiler 18. The reboiler 18, which is equipped with an electrical heating device, can vaporize a portion of the aqueous solution to drive off any residual gases. The reboiler temperature may be set to approximately 125 °C. The vapors may rise from the reboiler and be returned to the regenerator 12, which can comingle with falling liquid and then exit through line 13 for entry into the condensation stage of the process. The regenerated aqueous absorption medium from the reboiler 18 can leave through line 19 and be cooled in a heat exchanger 20. Then, the regenerated (i.e., acid gas lean) aqueous absorption medium can be pumped via pump 21 back into absorber 2 through solvent feed line 5.

The following materials can be principally used in the Examples:

| | |
|---|---|
| MDEA | Refers to a solution of approximately 98% of the tertiary alkanolamine methyldiethanolamine available from The Dow Chemical Company or affiliated company and having the following structure: |
| | 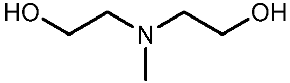 |
| TEA | Refers to a solution of approximately 98% of the tertiary alkanolamine triethanolamine available from The Dow Chemical Company or affiliated company and having the following structure: |
| | 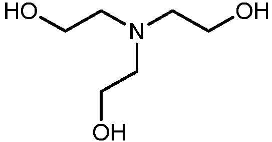 |
| HEMAPD | Refers to a solution of approximately 98% of tertiary alkanolamine 3-[2-hydroxyethyl)methylamino]-1,2-propanediol available from The Dow Chemical Company or affiliated company and having the following structure: |
| | 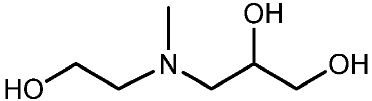 |

Referring to the examples, below, comparison is made between the tertiary alkanolamines HEMAPD, TEA, and MDEA based on the conditions in Table 2. Each example includes 50 wt% water and 50 wt% of the indicated alkanolamine as the aqueous liquid absorption medium. The examples are set at 50 wt% of water, as that is a typical target for maximizing capacity for acid gases while minimizing corrosion and processing issues, but it is well-known that the total amine content (hence amount of water) can be varied based on the intended use and type of materials used in a specific gas treating facility.

**Table 2**

| | **Alkanolamine** | **Circulation rate (liters / min)** | **H₃PO₄ (wt %)** | **Amine Loss (kg / Nm³)** | **H₂S Treat (ppmᵥ)** |
|---|---|---|---|---|---|
| Working Example 1 | HEMAPD | 1590 | 0.1 | 3.4x10⁻⁹ | 107 |
| Working Example 2 | HEMAPD | 1590 | 0.7 | 3.4x10⁻⁹ | 3 |
| Working Example 3 | HEMAPD | 1590 | 1.0 | 3.4x10⁻⁹ | 10 |
| Comparative Example A | TEA | 1817 | 0.1 | 3.4x10⁻⁹ | 2 |
| Comparative Example B | TEA | 1817 | 0.7 | 3.4x10⁻⁹ | 3600 |
| Comparative Example C | TEA | 1817 | 1.0 | 3.4x10⁻⁹ | 5287 |
| Comparative Example D | MDEA | 1211 | 0.1 | 2.6x10⁻⁶ | 63 |
| Comparative Example E | MDEA | 1211 | 0.7 | 2.6x10⁻⁶ | 4 |
| Comparative Example F | MDEA | 1211 | 1.0 | 2.6x10⁻⁶ | 2 |

The examples are based on treating the feed gas (i.e., feed line 1 in FIG. 1), which enters the absorption column 2 with a H₂S content of 2.0 mol%. This feed gas has a composition of 6.7 mol% of CO₂, 6.0 mol% of H₂O, 2.0 mol% of hydrogen, with a remainder of nitrogen. The overall stream information is provided in Table 3, below.

**Table 3**

| | |
|---|---|
| **Pressure** | 115.1 kPa |
| **Feed Temperature** | 28 °C |
| **Total Feed Flow** | 22876 Nm3/hr at 0 C |
| **Composition** | 6.0 mol % H₂O |
| | 6.7 mol % CO₂ |
| | 2.0 mol % H₂S |
| | 2.0 mol % H₂ |
| | 83.3 mol % N₂ |
| **Absorber** | Operating at feed pressure, 6.1 m of Raschig super ring packing |
| **Regenerator** | Operating at 163.4 kPa, 12.2 m of Raschig super-ring packing, condenser temp 40 C |
| **Reboiler Energy Input** | 0.12 kg of steam/liter amine circulating for all the cases considered |

The circulation rate is set as low as possible for the specific alkanolamines, and circulation rates above 1705 liters/min may be considered high and undesirable. The absorption column calculations are performed using a rate-based calculation method wherein the enhancement of absorption due to chemical reaction is described using the enhancement factor model of Wellek (1979). Mass transfer coefficients are obtained from the Scheffe-Weiland model. The flow scheme is the standard amine plant flowsheet of Bottoms. For the thermodynamic calculations, the electrolyte NRTL model of Chen & Evans (1986) is used for MDEA and TEA. Since HEMAPD is a structural isomer of TEA, it can be reasonably assumed that physical properties such as viscosity, density, and volatility are approximately to those of TEA. HEMAPD is modeled by using TEA as a surrogate molecule and modifying its protonation constant to achieve a basicity consistent with that of HEMAPD.

Referring to Working Examples 1 to 3, it shown that when HEMAPD is used as the amine in the aqueous liquid absorption medium for treating an industrial gas stream, amine loss (volatility) and H₂S content may both be minimized and are considered relatively low (i.e., highly desirable). However, referring to Comparative Examples A to C, it is shown that when TEA is used, while amine loss may be minimized, H₂S content may be higher especially when an acid is added. Further, referring to Comparative Examples D to F, it is shown that when MDEA is used, while H₂S content may be lower especially when an acid is added, amine loss may be high with or without addition of such acid. So overall, it is shown that HEMAPD may provide both the minimized amine loss (volatility) and low H₂S content (high H₂S removal), which results may not be realized for the other tertiary alkanolamines TEA and MDEA.

Referring to the H₃PO₄ (phosphoric acid) in the examples, it is shown that at high acid levels, TEA is less effective at H₂S removal, which acid may be necessary for gas treating in view of the low pKₐ of TEA. Further, for MDEA amine loss is undesirably higher than that of HEMAPD and TEA for all acid levels.

Further, it is found that for Working Examples 1 to 3, carbon dioxide removal is approximately 5.4 %, 4.8 % and 4.5 %, respectively, in the feed gas by the aqueous absorption medium.

## Claims

1. A method for treating an industrial gas stream in an essentially gaseous state, and which includes acid gases, the method comprising:
contacting the industrial gas stream with an aqueous liquid absorption medium in a gas/liquid absorber,
the aqueous liquid absorption medium including at least:
(a) a tertiary alkanolamine having the General Formula (I) in an amount for 10 wt% to 90 wt%, based on a total weight of the aqueous liquid absorption medium, 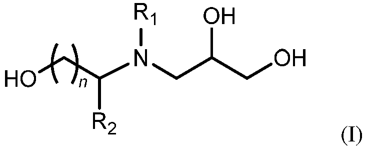 wherein R₁ is a C₁ to C₄ alkyl, R₂ is H or C₁ to C₂ alkyl, and n is an integer from 1 to 3, and
(b) water in an amount from 10 wt% to 90 wt%, based on a total weight of the aqueous liquid absorption medium.

2. The method as claimed in claim 1, wherein the industrial gas stream includes synthesis gas, flue gas, or biogas.

3. The method as claimed in claim 1 or claim 2, wherein the aqueous liquid absorption medium further includes an acid in an amount from 0.1 wt% to 3.0 wt%, based on total weight of the aqueous liquid absorption medium.

4. The method as in any of claim 1 or claim 2, wherein the aqueous liquid absorption medium further includes phosphoric acid in an amount from 0.1 wt% to 3.0 wt%, based on total weight of the aqueous liquid absorption medium.

5. The method as claimed in any one of claims 1 to 4, wherein R₁ is a C₁ alkyl. R₂ is H, and n is 1.

6. The method as claimed in any one of claims 1 to 5, wherein the aqueous liquid absorption medium is at an elevated temperature of from 55 °C to 80 °C.

7. The method as claimed in claim 1, wherein:
the industrial gas stream consists of synthesis gas, flue gas, or biogas;
the aqueous liquid absorption medium consists essentially of from 30 wt% to 75 wt% of the tertiary alkanolamine, from 0.1 wt% to 3.0 wt% of phosphoric acid, and from 20 wt% to 65 wt% of water, based on the total weight of the aqueous liquid absorption medium; and
R₁ is a C₁ alkyl. R₂ is H, and n is 1.

8. The method as claimed in any one of claims 1 to 7, further comprising:
forming an acid gas rich aqueous absorption medium by allowing the industrial gas stream and the aqueous liquid absorption medium to come into contact in the gas/liquid absorber, and
at least partially removing acid gases from the acid gas rich aqueous absorption medium to form an acid gas lean aqueous absorption medium, and
regenerating the acid gas lean aqueous absorption medium for further removal of acid gases from the industrial gas stream.

## Patentansprüche

1. Verfahren zum Behandeln eines Industriegasstroms in einem im Wesentlichen gasförmigen Zustand, und der Säuregase einschließt, das Verfahren umfassend:
Inkontaktbringen des Industriegasstroms mit einem wässrigen flüssigen Absorptionsmedium in einem Gas-/Flüssigkeitsabsorber,
wobei das wässrige flüssige Absorptionsmedium mindestens einschließt:
(a) ein tertiäres Alkanolamin, das die allgemeine Formel (I) in einer Menge von 10 Gew.-% bis 90 Gew.-% aufweist, basierend auf dem Gesamtgewicht des wässrigen flüssigen Absorptionsmediums, 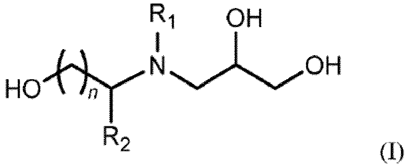 wobei R₁ ein C₁ bis C₄-Alkyl ist, R₂ H oder C₁ bis C₂-Alkyl ist, und n eine ganze Zahl von 1 bis 3 ist, und
(b) Wasser in einer Menge von 10 Gew.-% bis 90 Gew.-%, basierend auf dem Gesamtgewicht des wässrigen flüssigen Absorptionsmediums.

2. Verfahren nach Anspruch 1, wobei der Industriegasstrom Synthesegas, Rauchgas oder Biogas einschließt.

3. Verfahren nach Anspruch 1 oder 2, wobei das wässrige flüssige Absorptionsmedium ferner eine Säure in einer Menge von 0,1 Gew.-% bis 3,0 Gew.-% einschließt, basierend auf dem Gesamtgewicht des wässrigen flüssigen Absorptionsmediums.

4. Verfahren nach einem der Ansprüche 1 oder 2, wobei das wässrige flüssige Absorptionsmedium ferner Phosphorsäure in einer Menge von 0,1 Gew.-% bis 3,0 Gew.-% einschließt, basierend auf dem Gesamtgewicht des wässrigen flüssigen Absorptionsmediums.

5. Verfahren nach einem der Ansprüche 1 bis 4, wobei R₁ ein C₁-Alkyl ist. R₂ H ist und n 1 ist.

6. Verfahren nach einem der Ansprüche 1 bis 5, wobei das wässrige flüssige Absorptionsmedium eine erhöhte Temperatur von 55 °C bis 80 °C vorweist.

7. Verfahren nach Anspruch 1, wobei:
der Industriegasstrom aus Synthesegas, Rauchgas oder Biogas besteht;
das wässrige flüssige Absorptionsmedium im Wesentlichen aus von 30 Gew.-% bis 75 Gew.-% des tertiären Alkanolamins, von 0,1 Gew.-% bis 3,0 Gew.-% Phosphorsäure und von 20 Gew.-% bis 65 Gew.-% Wasser besteht, basierend auf dem Gesamtgewicht des wässrigen flüssigen Absorptionsmediums; und
R₁ ein C₁-Alkyl ist. R₂ H ist und n 1 ist.

8. Verfahren nach einem der Ansprüche 1 bis 7, ferner umfassend:
Ausbilden eines säuregasreichen wässrigen Absorptionsmediums durch ein Ermöglichen, dass der Industriegasstrom mit dem wässrigen flüssigen Absorptionsmedium in dem Gas-/Flüssigkeitsabsorber in Kontakt tritt und
mindestens teilweises Entfernen von Säuregasen aus dem säuregasreichen wässrigen Absorptionsmedium, um ein säuregasarmes wässriges Absorptionsmedium auszubilden, und
Regenerieren des säuregasarmen wässrigen Absorptionsmediums für eine weitere Entfernung von Säuregasen aus dem Industriegasstrom.

## Revendications

1. Procédé de traitement d'un flux de gaz industriel dans un état sensiblement gazeux, et qui comporte des gaz acides, le procédé comprenant :
la mise en contact du flux de gaz industriel avec un milieu d'absorption liquide aqueux dans un absorbeur gaz/liquide,
le milieu d'absorption liquide aqueux comportant au moins :
(a) une alcanolamine tertiaire répondant à la formule générale (I) en une quantité allant de 10 % en poids à 90 % en poids, en fonction d'un poids total du milieu d'absorption liquide aqueux, 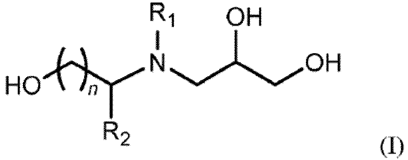 où R₁ est un alkyle en C₁ à C₄, R₂ est H ou alkyle en C₁ à C₂, et n est un nombre entier allant de 1 à 3, et
(b) de l'eau en une quantité allant de 10 % en poids à 90 % en poids, en fonction d'un poids total du milieu d'absorption liquide aqueux.

2. Procédé selon la revendication 1, dans lequel le flux de gaz industriel comporte du gaz de synthèse, du gaz de combustion, ou du biogaz.

3. Procédé selon la revendication 1 ou la revendication 2, dans lequel le milieu d'absorption liquide aqueux comporte en outre un acide en une quantité allant de 0,1 % en poids à 3,0 % en poids, en fonction du poids total du milieu d'absorption liquide aqueux.

4. Procédé selon l'une quelconque de la revendication 1 ou de la revendication 2, dans lequel le milieu d'absorption liquide aqueux comporte en outre de l'acide phosphorique en une quantité allant de 0,1 % en poids à 3,0 % en poids, en fonction du poids total du milieu d'absorption liquide aqueux.

5. Procédé selon l'une quelconque des revendications 1 à 4, dans lequel R₁ est un alkyle en C₁. R₂ est H, et n est 1.

6. Procédé selon l'une quelconque des revendications 1 à 5, dans lequel le milieu d'absorption liquide aqueux est à une température élevée allant de 55 °C à 80 °C.

7. Procédé selon la revendication 1, dans lequel :
le flux de gaz industriel est constitué de gaz de synthèse, de gaz de combustion, ou de biogaz ;
le milieu d'absorption liquide aqueux est constitué sensiblement de 30 % en poids à 75 % en poids de l'alcanolamine tertiaire, de 0,1 % en poids à 3,0 % en poids d'acide phosphorique, et de 20 % en poids à 65 % en poids d'eau, en fonction du poids total du milieu d'absorption liquide aqueux ; et
R₁ est un alkyle en C₁. R₂ est H, et n est 1.

8. Procédé selon l'une quelconque des revendications 1 à 7, comprenant en outre :
la formation d'un milieu d'absorption aqueux riche en gaz acides en permettant au flux de gaz industriel et au milieu d'absorption liquide aqueux d'entrer en contact dans l'absorbeur gaz/liquide, et
l'élimination au moins partielle de gaz acides du milieu d'absorption aqueux riche en gaz acides pour former un milieu d'absorption aqueux pauvre en gaz acides, et
la régénération du milieu d'absorption aqueux pauvre en gaz acides pour une nouvelle élimination de gaz acides du flux de gaz industriel.
